# FASCICULE DE BREVET EUROPEEN

(11) **EP 3 785 584 B1**
(45) Date de publication et mention de la délivrance du brevet: **30.08.2023**
(21) Numéro de dépôt: 20189715.4
(22) Date de dépôt: 05.08.2020
(51) Int. Cl.: A47J 37/06

(54) **APPAREIL DE CUISSON A AIR CHAUD MUNI D'UNE EMBASE DE RECEPTION D'UN RECIPIENT DE CUISSON ET D'UN DISPOSITIF DE VERROUILLAGE ENTRE LE RECIPIENT ET L'EMBASE**
HEISSLUFTKOCHGERÄT, DAS MIT EINER AUFNAHMEBASIS FÜR EINEN KOCHBEHÄLTER UND EINER VERRIEGELUNGSVORRICHTUNG ZWISCHEN DEM BEHÄLTER UND DER BASIS AUSGESTATTET IST
HOT AIR COOKING APPLIANCE PROVIDED WITH A BASE FOR RECEIVING A COOKING VESSEL AND A LOCKING DEVICE BETWEEN THE CONTAINER AND THE BASE

(30) Priorité: 29.08.2019 FR 1909530
(43) Date de publication de la demande: 03.03.2021
(73) Titulaire: SEB S.A., 69130 Ecully (FR)
(72) Inventeur: PRIETO, Guillaume, 21380 Marsannay le Bois (FR); BAILLY, Adrien, 69100 Villeurbanne (FR); DUMOUX, Philippe, 21120 Gemeaux (FR)
(74) Mandataire: SEB Développement

(56) Documents cités:
- CN-A- 105 615 686
- CN-U- 203 953 373
- DE-U1-202014 103 133
- US-A1- 2016 150 915

## Description

### Domaine technique

La présente invention concerne les appareils de cuisson à air chaud qui permettent de réaliser une cuisson des aliments au moyen d'une circulation d'air chaud, ladite cuisson étant réalisée en utilisant très peu d'huile, voire pas du tout d'huile.

Un principal objectif de l'invention est de mettre en oeuvre une architecture simple et économique d'appareil de cuisson à air chaud.

### Etat de la technique

Les appareils de cuisson à air chaud sont bien connus de l'homme du métier, ceux-ci étant généralement dénommés « friteuse à air chaud ». Un tel appareil de cuisson permet de réduire fortement la quantité de matière grasse, voire de la supprimer complètement, lors de la cuisson des aliments qui s'effectue simplement grâce à de l'air chaud qui circule dans une enceinte de cuisson contenant les aliments à cuire. Ainsi, il est possible de consommer des aliments plus diététiques, ces aliments pouvant être d'origine végétale ou animale, par exemple des frites, des légumes, de la viande ou du poisson.

En outre, un tel appareil comprend un dispositif de verrouillage agencé entre le récipient de cuisson et l'embase et mobile entre une position verrouillée dans laquelle ledit récipient de cuisson est immobilisé en position insérée dans le logement de l'embase et une position déverrouillée dans laquelle le récipient de cuisson est libre de mouvement vis-à-vis du logement de l'embase.

Un appareil de cuisson à air chaud comprend généralement une embase fermée qui incorpore une cuve amovible. Cette cuve permet la réception des aliments à cuire, soit directement soit en disposant ces aliments à cuire dans un panier amovible, lui-même positionné dans la cuve. Une fois les aliments disposés dans la cuve et celle-ci placée dans l'embase, l'appareil de cuisson est fermé pour constituer une enceinte de cuisson incorporant la cuve, l'éventuel panier et les aliments. De l'air chaud circule ensuite dans cette enceinte de cuisson au moyen d'un bloc de chauffe disposé en partie supérieure de l'appareil de cuisson, au-dessus de l'embase, la circulation de l'air chaud permettant de réaliser la cuisson des aliments placés dans la cuve. Le bloc de chauffe comporte un dispositif de chauffe et un dispositif de circulation d'air permettant d'assurer la circulation de l'air chauffé dans l'enceinte de cuisson.

Ainsi, le document CN105615686A décrit un tel appareil de cuisson à air chaud, lequel comprend un bloc de chauffe agencé en partie supérieure, une embase agencée en partie inférieure et comprenant un logement au-dessus duquel se situe le bloc de chauffe et au moins un récipient de cuisson, ou cuve, muni d'une ouverture supérieure, ledit logement étant apte à recevoir le récipient de cuisson en disposant son ouverture supérieure en regard dudit bloc de chauffe, l'embase comprenant une ouverture frontale communiquant avec le logement de sorte à autoriser l'insertion du récipient de cuisson dans ledit logement et son retrait de celui-ci en passant par ladite ouverture frontale.

Lorsque la cuisson des aliments est terminée, l'appareil est ouvert et la cuve extraite de l'embase, les aliments cuits étant ensuite transvidés dans un plat de service qui est alors posé sur la table au moment du repas. Ce transfert des aliments cuits dans un plat de service - qui est généralement froid - engendre le refroidissement des aliments cuits avant leur consommation. Il est par ailleurs nécessaire de laver ce plat de service après son utilisation, en plus de la cuve et éventuellement du panier de l'appareil de cuisson.

Par ailleurs, lorsque l'appareil de cuisson à air chaud n'est plus utilisé, celui-ci est généralement rangé pour ne pas encombrer inutilement le plan de travail de la cuisine. Cependant, l'encombrement en hauteur d'un tel appareil peut empêcher son rangement dans un placard standard de cuisine, ce qui impose soit d'avoir un placard adapté dans la cuisine, soit de le laisser sur le plan de travail de la cuisine, soit de le ranger dans une autre pièce, par exemple sur une étagère adaptée placée dans un cellier ou dans une autre pièce annexe à la cuisine, telle qu'un garage.

Il est également connu du document US2016150915A1 un appareil de cuisson présentant une embase comprenant deux parois latérales munies chacune d'un bord libre contigu à l'ouverture frontale et d'une découpe transversale sur ladite paroi latérale et débouchant sur ledit bord libre, chacune desdites découpes étant apte à recevoir un élément de préhension du récipient de cuisson en les laissant dépasser à l'extérieur des parois latérales de manière à conserver l'accès manuel à chaque élément de préhension dudit récipient de cuisson par lesdites parois latérales au cours de l'insertion ou du retrait du récipient de cuisson dudit logement, le dispositif de verrouillage comprenant les éléments de préhension du récipient de cuisson et les découpes des parois latérales de l'embase.

Une telle configuration d'appareil permet d'utiliser la cuve comme plat de service et ainsi éviter l'utilisation de plats de service additionnels.

Cependant, les poignées du récipient de cuisson présentent un encombrement ne facilitant pas le rangement de l'appareil de cuisson lorsqu'il n'est pas utilisé.

### Exposé de l'invention

L'invention a pour principal objectif de concevoir une architecture d'appareil de cuisson à air chaud plus économique et sécurisée permettant d'éviter l'utilisation de plats de service additionnels. Un autre objectif est de faciliter le rangement de l'appareil de cuisson lorsqu'il n'est pas utilisé.

L'invention porte sur un appareil de cuisson à air chaud qui comprend un bloc de chauffe agencé en partie supérieure, une embase agencée en partie inférieure et comprenant un logement au-dessus duquel se situe le bloc de chauffe. L'appareil comprend aussi au moins un récipient de cuisson muni d'une ouverture supérieure, ledit logement étant apte à recevoir le récipient de cuisson en disposant son ouverture supérieure en regard dudit bloc de chauffe. En outre, l'embase comprend une ouverture frontale communiquant avec le logement de sorte à autoriser l'insertion du récipient de cuisson dans ledit logement et son retrait de celui-ci en passant par ladite ouverture frontale. Par ailleurs, l'appareil de cuisson à air chaud comprend un dispositif de verrouillage agencé entre le récipient de cuisson et l'embase, ledit dispositif de verrouillage étant mobile entre une position verrouillée dans laquelle ledit récipient de cuisson est immobilisé en position insérée dans le logement de l'embase et une position déverrouillée dans laquelle le récipient de cuisson est libre de mouvement vis-à-vis du logement de l'embase.

Ainsi, la conception de l'appareil de cuisson à air chaud selon l'invention permet de placer directement les aliments à cuire dans un récipient de cuisson qui est utilisé non seulement sur l'appareil de cuisson pour réaliser ladite cuisson au moyen de l'air chaud circulant dans ledit récipient de cuisson grâce au bloc de chauffe, mais aussi pour réaliser directement le service à table sans nécessiter de transvider les aliments cuits dans un plat de service additionnel. D'une part, cela permet de réduire la quantité de vaisselle à laver. D'autre part, l'absence de transfert des aliments cuits dans un plat de service et l'utilisation directe du récipient de cuisson qui vient d'être utilisé pour la cuisson et dont la paroi est encore chaude, permettent de conserver les aliments cuits bien chauds jusqu'à leur service dans les assiettes. Par ailleurs, la présence permanente de cette ouverture frontale sur l'embase permet de réduire la quantité de matière nécessaire pour la conception de l'appareil de cuisson, ce qui réduit son coût total de fabrication. En outre, la présence du dispositif de verrouillage entre le récipient et l'embase permet d'interdire tout mouvement relatif entre le récipient et l'embase, ce qui empêche d'agiter le récipient de cuisson en position dans l'embase et/ou d'extraire inopinément le récipient de cuisson durant le fonctionnement du bloc de chauffe. Ainsi, l'utilisation de l'appareil de cuisson à air chaud est complètement sécurisée malgré la présence permanente de l'ouverture frontale sur l'embase et l'accessibilité en permanence au récipient de cuisson inséré dans le logement de l'embase durant la cuisson.

Selon l'appareil de cuisson à air chaud objet de l'invention, l'embase comprend deux parois latérales munies chacune d'un bord libre contigu à l'ouverture frontale et d'une découpe transversale sur ladite paroi latérale et débouchant sur ledit bord libre. Chacune des découpes est apte à recevoir un élément de préhension du récipient de cuisson en les laissant dépasser à l'extérieur des parois latérales de manière à conserver l'accès manuel à chaque élément de préhension dudit récipient de cuisson par lesdites parois latérales au cours de l'insertion ou du retrait du récipient de cuisson dudit logement. Ainsi, les éléments de préhension du récipient de cuisson peuvent être maintenus correctement durant l'insertion dudit récipient de cuisson dans l'embase et durant son retrait de celle-ci.

Selon l'appareil de cuisson à air chaud, le dispositif de verrouillage comprend les éléments de préhension du récipient de cuisson et les découpes des parois latérales de l'embase.

Selon l'appareil de cuisson à air chaud objet de l'invention, les éléments de préhension sont articulés sur le récipient de cuisson pour être placés soit dans une position déployée selon laquelle lesdits éléments de préhension permettent la manipulation du récipient et peuvent être insérés dans les découpes des parois latérales de l'embase soit dans une position rabattue selon laquelle lesdits éléments de préhension, en position dans les découpes, coopèrent avec des éléments de butée sur les faces externes des parois latérales et interdisent le retrait du récipient du logement.

De préférence, selon cette réalisation de l'appareil de cuisson à air chaud, les éléments de butée sont mis en oeuvre par des cavités sur les faces externes des parois latérales au niveau des découpes, les éléments de préhension venant se loger dans lesdites cavités lors de leur déplacement de la position déployée vers la position rabattue. Ainsi, outre leur fonction de butée, ces cavités permettent de dissimuler dans l'embase les éléments de préhension en position rabattue. On pourrait envisager de mettre en oeuvre différemment ces éléments de butée en prévoyant des protubérances sur les faces externes des parois latérales, les éléments de préhension venant se caler contre ces protubérances dans leur position rabattue.

De préférence, selon cette réalisation de l'appareil de cuisson à air chaud, les éléments de préhension du récipient de cuisson comprennent chacun une came, les cames prenant appui sur les parois latérales au niveau des découpes recevant lesdits éléments de préhension. Ainsi, les découpes sont aptes à supporter les cames des éléments de préhension du récipient de cuisson lorsque ledit récipient de cuisson est inséré dans le logement. En outre, ces cames sont configurées pour rehausser le récipient de cuisson dans le logement lors du déplacement desdits éléments de préhension de la position déployée vers la position rabattue. Ainsi, les cames mettent en oeuvre un dispositif d'élévation apte à rehausser le récipient de cuisson placé dans le logement de sorte à rapprocher le récipient de cuisson vers le bloc de chauffe.

Selon l'invention, l'embase comprend un socle agencé sous l'ouverture frontale et le logement. Ce socle comprend un système de guidage apte à aligner en hauteur les éléments de préhension du récipient de cuisson avec les découpes en début d'insertion du récipient de cuisson par l'ouverture frontale. Cela facilite l'introduction du récipient de cuisson dans le logement en positionnant correctement les éléments de préhension du récipient vis-à-vis des découpes sur les parois latérales, de manière intuitive. Selon une réalisation, ce système de guidage comprend au moins une rampe de guidage, de préférence trois rampes de guidage.

Selon une réalisation de l'appareil de cuisson à air chaud, les parois latérales de l'embase comprennent chacune sur leur face interne au moins un élément de support apte à recevoir un élément d'appui d'un ustensile de cuisson en maintenant ledit ustensile de cuisson écarté du bloc de chauffe. Ainsi, selon cette réalisation, l'appareil de cuisson est conçu pour recevoir avant tout un récipient de cuisson, mais aussi un ou plusieurs autres ustensiles de cuisson, comme cela apparaitra ci-après. De préférence, selon cette réalisation, les faces internes des parois latérales comprennent chacune au moins deux éléments de support agencés à des hauteurs différentes sur chacune desdites faces internes, lesdits éléments de support étant aptes à recevoir l'un ou l'autre un élément d'appui d'un ustensile de cuisson en le maintenant écarté du bloc de chauffe selon au moins deux hauteurs différentes. Ainsi, l'appareil de cuisson comprend au moins deux positions d'écartement de l'ustensile de cuisson par rapport au bloc de chauffe, lors de son positionnement dans le logement.

Selon une réalisation de l'appareil de cuisson à air chaud, le bloc de chauffe se monte de façon amovible au-dessus du logement de l'embase pour définir une configuration fonctionnelle de l'appareil de cuisson. En outre, l'appareil de cuisson présente une configuration de rangement dans laquelle le bloc de chauffe est placé en position retournée par-dessus l'embase en encastrant une partie dédiée dudit bloc de chauffe dans le logement de ladite embase. On entend par « encastrer » le fait de faire coïncider deux parties de formes complémentaires. Ainsi, la partie dédiée du bloc de chauffe est insérée en position retournée par-dessus l'embase, jusqu'à atteindre une position d'arrêt définie où le bloc de chauffe retourné prend appui sur une partie complémentaire de ladite embase. Ces caractéristiques de l'appareil de cuisson à air chaud permettent de réduire sa hauteur dans la configuration de rangement, ce qui permettra de le placer plus facilement sur une tablette dans un placard de cuisine ou sur une tablette d'une étagère sans être gêné par sa hauteur.

Selon une réalisation de l'appareil de cuisson à air chaud, un dispositif d'étanchéité est mis en oeuvre entre l'ouverture supérieure de l'au moins un récipient de cuisson et le bloc de chauffe lorsque ledit au moins un récipient de cuisson est inséré dans le logement. La présence de ce dispositif d'étanchéité permet d'assurer une circulation de l'air chaud dans le récipient grâce au bloc de chauffe, en évitant l'échappement de cet air chaud au niveau de la jonction entre l'ouverture supérieure du récipient et le bloc de chauffe. On peut toutefois envisager des variantes sans ce dispositif d'étanchéité, l'ouverture supérieure du récipient étant dans ce cas placée à proximité du bloc de chauffe pour concentrer la circulation de l'air chaud dans le récipient en limitant les fuites d'air chaud par l'espacement laissé entre l'ouverture supérieure du récipient et le bloc de chauffe. De préférence, ce dispositif d'étanchéité précité comprend un joint d'étanchéité agencé sur un bord de l'ouverture supérieure de l'au moins un récipient de cuisson ou sur un bord d'une ouverture inférieure du bloc de chauffe.

Selon une réalisation de l'appareil de cuisson à air chaud, l'au moins un récipient de cuisson est transparent. Cela permet une visualisation des aliments durant leur cuisson dans le récipient de cuisson, notamment pour surveiller ladite cuisson des aliments. On peut toutefois envisager un récipient de cuisson opaque.

L'invention concerne aussi un système de cuisson comprenant un appareil de cuisson à air chaud présentant les caractéristiques précitées et un kit d'accessoires de cuisson comprenant au moins un couvercle apte à être placé sur l'ouverture supérieure de l'au moins un récipient de cuisson lorsqu'il est dégagé du logement. Par exemple, le kit d'accessoires peut soit comprendre autant de couvercles que de récipients de cuisson, les couvercles étant adaptés aux récipients de cuisson, soit comprendre un seul couvercle adapté à tous les récipients de cuisson. Un tel couvercle permet de maintenir les aliments au chaud une fois cuits et le récipient de cuisson placé sur la table, dans l'attente du service dans les assiettes.

Selon une réalisation du système de cuisson, l'appareil de cuisson à air chaud comprend les caractéristiques précitées consistant à prévoir sur chacune des faces internes des parois latérales de l'embase au moins un élément de support. En outre, le kit d'accessoires de cuisson comprend au moins un ustensile de cuisson complémentaire à l'au moins un récipient de cuisson, chaque ustensile de cuisson comprenant deux éléments d'appui aptes à reposer sur les au moins un élément de support des faces internes des deux parois latérales de l'embase, afin de maintenir ledit au moins un ustensile de cuisson dans le logement de l'embase avec un écartement par rapport au bloc de chauffe. Ainsi, les fonctions de cuisson de l'appareil de cuisson peuvent être étendues, en comparaison des appareils de cuisson traditionnels. L'au moins un ustensile de cuisson est notamment choisi parmi une grille, une plaque et un moule rigide plat muni d'empreintes ; d'autres ustensiles de cuisson pourraient toutefois être envisagés dans le cadre de l'invention.

### Brève description des figures

Les caractéristiques et avantages de l'invention apparaîtront à la lecture de la description suivante s'appuyant sur des figures, parmi lesquelles :
[Fig. 1] La figure 1 illustre une vue d'ensemble d'un appareil de cuisson selon l'invention en configuration fonctionnelle, avec un récipient de cuisson placé dans le logement de l'embase ;
[Fig. 2] La figure 2 illustre une vue d'ensemble d'un appareil de cuisson selon l'invention en configuration de rangement ;
[Fig. 3] La figure 3 illustre une vue d'ensemble de l'appareil de cuisson en cours de transformation de la configuration fonctionnelle illustrée en figure 1 vers la configuration de rangement illustrée en figure 2 ;
[Fig. 4] La figure 4 illustre un bloc de chauffe de l'appareil de cuisson ;
[Fig. 5] La figure 5 illustre un dispositif de verrouillage du récipient de cuisson placé dans le logement de l'embase et un dispositif d'accrochage du bloc de chauffe sur l'embase dans la configuration fonctionnelle de l'appareil de cuisson ;
[Fig. 6] La figure 6 illustre le dispositif de verrouillage entre le récipient de cuisson et l'embase avant sa mise en place ;
[Fig. 7] La figure 7 illustre le dispositif de verrouillage de la figure 6, en cours de mise en place ;
[Fig. 8] La figure 8 illustre le dispositif de verrouillage des figures 6 et 7, mis en place ;
[Fig. 9] La figure 9 illustre partiellement un bloc de chauffe placé directement sur un récipient de cuisson ;
[Fig. 10] La figure 10 illustre un système de guidage sur le socle de l'embase représentée partiellement ;
[Fig. 11] La figure 11 illustre un ustensile de cuisson du type grille.

### Description détaillée de l'invention

Dans la suite de la description, le terme appareil est utilisé pour désigner un appareil de cuisson à air chaud selon l'invention. De même, le terme récipient est utilisé pour désigner un récipient de cuisson. En outre, les mêmes références sont utilisées pour désigner les caractéristiques identiques ou équivalentes selon les diverses variantes de réalisation de l'appareil et du récipient.

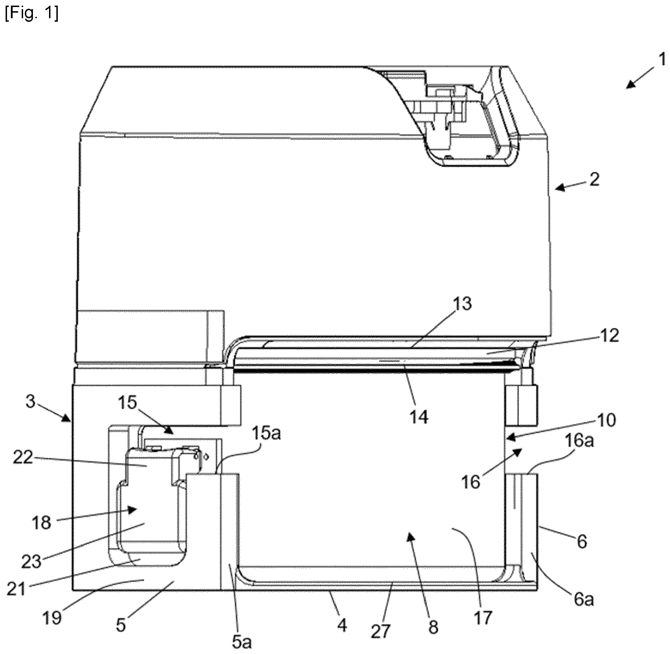

Les termes « supérieur » et « inférieur » sont utilisés dans la présente description en considération de la position normale des éléments de l'appareil placé en configuration fonctionnelle, telle qu'illustrée en figure 1, ledit appareil étant placé face à l'utilisateur sur une table ou un plan de cuisine.

Comme illustré sur les figures 1 à 3, l'appareil 1 comprend dans sa partie supérieure un bloc de chauffe 2 et dans sa partie inférieure une embase 3. L'embase 3 comprend un socle 4, deux parois latérales 5, 6, une paroi de fond 7 et une ouverture frontale 8. Les parois latérales 5, 6 comprennent chacune un bord libre 5a, 6a, lesdits bords libres 5a, 6a étant contigus à l'ouverture frontale 8. Ainsi, l'embase 3 définit un logement 9 situé en-dessous du bloc de chauffe 2. Ce logement 9 permet la réception d'un récipient 10, comme cela sera détaillé ensuite.

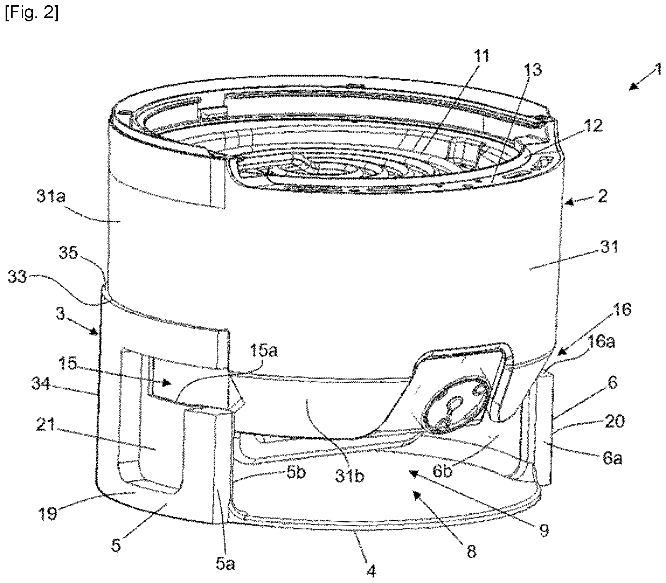

Lorsque l'appareil 1 est dans une configuration fonctionnelle telle qu'illustrée en figure 1, le bloc de chauffe 2 permet de faire circuler de l'air chaud vers le bas en direction du logement 9 de sorte que lorsque le récipient 10 est placé dans ledit logement 9, ledit air chaud circule dans ledit récipient 10. Le bloc de chauffe 2 est conçu pour faire circuler en cycle cet air chaud de sorte à le réchauffer et le renvoyer dans ledit récipient 10 disposé sous ledit bloc de chauffe 2. Ce bloc de chauffe 2 comprend une entrée d'air 42, un dispositif de chauffe de l'air 11 du type résistif (figure 2) et un dispositif de circulation d'air chaud du type ventilateur (non illustré), comme cela existe déjà traditionnellement sur les appareils de cuisson à air chaud du type friteuse à air chaud.

A la différence des appareils de cuisson traditionnels qui prévoient de placer une cuve et éventuellement un panier dans une enceinte de cuisson fermée, l'appareil 1 selon l'invention prévoit préférentiellement d'assurer une étanchéité entre le bloc de chauffe 2 et le récipient 10 lorsque celui-ci est placé dans le logement 9 sur l'embase 3, afin d'éviter que l'air chaud circulant dans le récipient 10 ne s'échappe par le haut dudit récipient 10. Pour cela un joint d'étanchéité 12 peut être placé sur un bord inférieur 13 du bloc de chauffe 2 de sorte à coopérer avec un bord supérieur 14 du récipient 10. Ce bord supérieur 14 définit une ouverture supérieure sur le récipient 10 permettant l'insertion et le retrait des aliments et par laquelle pénètre l'air chaud. Cette mise en place du joint d'étanchéité 12 sur le bloc de chauffe 2 sera préférée lorsque plusieurs récipients 10 présentant des contenances différentes et/ou conçus dans des matières différentes (inox, verre transparent ou opaque, aluminium ...) sont utilisables avec ledit appareil 1. On peut aussi envisager de placer ce joint d'étanchéité 12 sur le bord supérieur 14 du récipient 10 plutôt que sur le bord inférieur 13 du bloc de chauffe 2. Ce joint d'étanchéité 12 sera de préférence amovible pour faciliter le nettoyage, voire pour le positionner sur l'un ou l'autre des récipients 10 utilisables avec ledit appareil 1, dans la variante où lesdits récipients 10 sont conçus pour recevoir un tel joint d'étanchéité 12.

Des variantes sont aussi envisageables sans étanchéité entre le récipient 10 et le bloc de chauffe 2 de l'appareil 1, en conservant un léger écart entre le bord supérieur 14 du récipient 10 et le bord inférieur 13 du bloc de chauffe 2. Dans ce cas, l'air chaud circulant dans le récipient 10 sous l'action du bloc de chauffe 2 pourra s'échapper en partie par ledit écart laissé entre lesdits bords 13, 14.

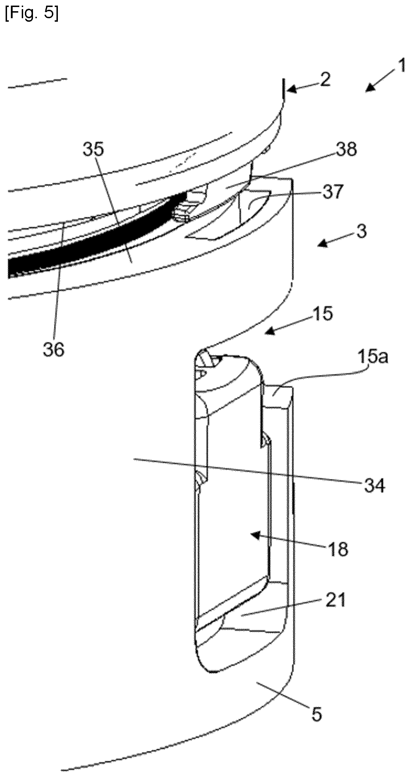

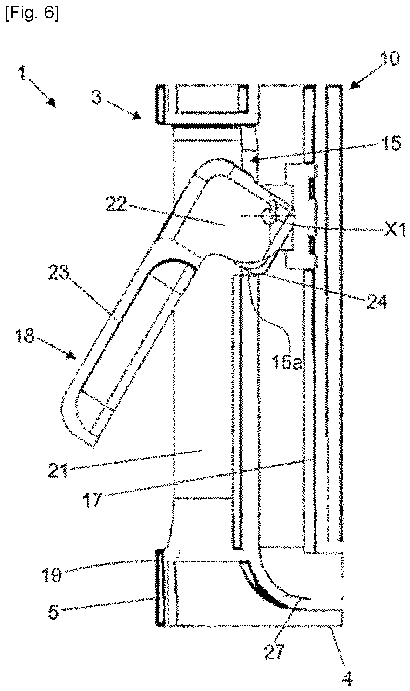

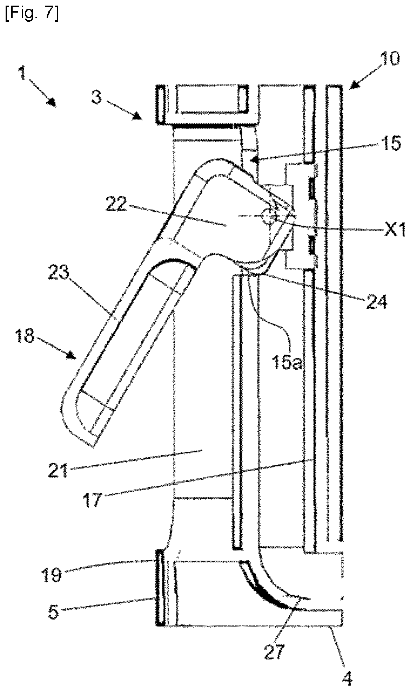

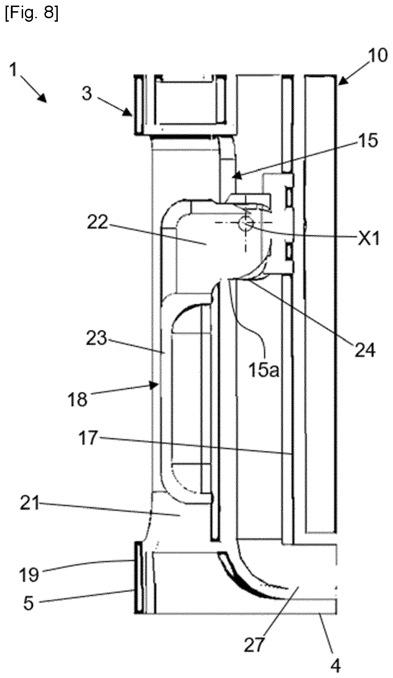

Comme illustré sur les figures 1 à 3 et 5 à 8, les parois latérales 5, 6 de l'embase 3 comprennent chacune une découpe 15, 16. Les deux découpes 15, 16 sont agencées transversalement sur les parois latérales 5, 6 et débouchent sur les bords libres 5a, 6a desdites parois latérales 5, 6. Le récipient 10 comprend sur son contour 17 deux éléments de préhension 18 disposés en opposition sur ledit contour 17. Un seul élément de préhension 18 est illustré sur les figures 1 et 5 à 8, mais le principe est identique pour le deuxième qui est disposé du côté opposé sur le récipient 10. Ces éléments de préhension 18 sont montés à pivotement selon un axe X1 sur le contour 17 du récipient 10 afin de pouvoir pivoter d'une position déployée en équerre vis-à-vis dudit contour 17, telle qu'illustrée en figure 6, vers une position rabattue contre la paroi de contour 17, telle qu'illustrée en figure 8. Les parois latérales 5, 6 de l'embase 3 comprennent chacune sur leurs faces externes 19, 20 une cavité 21, 21'. Les découpes 15, 16 présentent préférentiellement la forme d'une fente permettant d'y introduire un élément de préhension 18 en position déployée, ce qui permet d'insérer le récipient 10 dans le logement 9 en passant par l'ouverture frontale 8. Les découpes 15, 16 pourront être légèrement évasées au niveau des bords libres 5a, 6a des parois latérales 5, 6 de sorte à faciliter l'introduction des éléments de préhension 18 en position déployée. Une fois le récipient 10 placé dans le logement 9 sous le bloc de chauffe 2, les éléments de préhension 18 dépassent des découpes 15, 16 et sont accessibles par l'extérieur des parois latérales 5, 6, ce qui permet de saisir correctement ces éléments de préhension 18 durant l'insertion du récipient 10 dans le logement 9 et son retrait de celui-ci. Bien entendu, le diamètre du contour 17 et/ou la longueur des éléments de préhension 18 sur le récipient 10 sont adaptés en fonction du logement 9 et de l'écartement entre les deux parois latérales 5, 6 sur l'embase 3. Ces éléments de préhension 18 peuvent alors être pivotés de la position déployée illustrée en figure 6 vers la position rabattue illustrée en figure 8, selon laquelle lesdits éléments de préhension 18 viennent se loger dans les cavités 21, 21' sur les parois latérales 5, 6. Les cavités 21, 21' forment ainsi des butées qui empêchent de dégager les éléments de préhension 18 du récipient 10 en position rabattue. Cela permet de garantir le maintien du récipient 10 en position dans le logement 9 durant le fonctionnement du bloc de chauffe 2.

Comme illustré sur les figures 6 à 8, les éléments de préhension 18 présentent un corps 22 prolongé par une poignée 23, le corps 22 et la poignée formant sensiblement un « L ». Le corps est monté en pivot d'axe X1 vis-à-vis du contour 17 du récipient 10, tel que précisé précédemment. Les corps 22 des éléments de préhension 18 prennent appui sur les faces inférieures 15a, 16a des découpes 15, 16, ce qui permet aux parois latérales 5, 6 de supporter le récipient 10 inséré dans le logement 9. La forme du corps 22 permet de définir sur celui-ci une came 24 qui prend appui sur la face inférieure 15a, 16a de la découpe 15, 16. Lors du pivotement des éléments de préhension 18 de la position déployée illustrée en figure 6 jusqu'à la position rabattue illustrée en figure 8 où la poignée est logée dans la cavité 21, les cames 24 permettent de déplacer vers le haut le récipient 10 de sorte à venir positionner son bord supérieur 14 contre le bord inférieur 13 du bloc de chauffe 2, entre lesquels se situe le joint d'étanchéité 12, comme le montre la figure 1. Inversement, le passage de la position rabattue à la position déployée permet d'abaisser le récipient 10 pour le dégager du bloc de chauffe 2, permettant alors de saisir les éléments de préhension 18 en position déployée et d'extraire le récipient 10 du logement 9 de l'embase 3.

D'autres caractéristiques sont envisageables sur l'appareil 1 afin d'élever le récipient 10 dans le logement 9 de l'embase 3 et de rapprocher le bord supérieur 14 du récipient 10 du bord inférieur 13 du bloc de chauffe 2, indépendamment de la présence d'une came 24 sur le corps 22 de chacun des éléments de préhension 18. En effet, il est possible de prévoir des rampes d'élévation (non illustrées) inclinées vers le haut et agencées directement sur les faces inférieures 15a, 16a des découpes 15, 16, les corps 22 des éléments de préhension 18 prenant appui sur ces rampes durant l'insertion du récipient 10 dans le logement 9, permettant ainsi de rehausser ledit récipient 10.

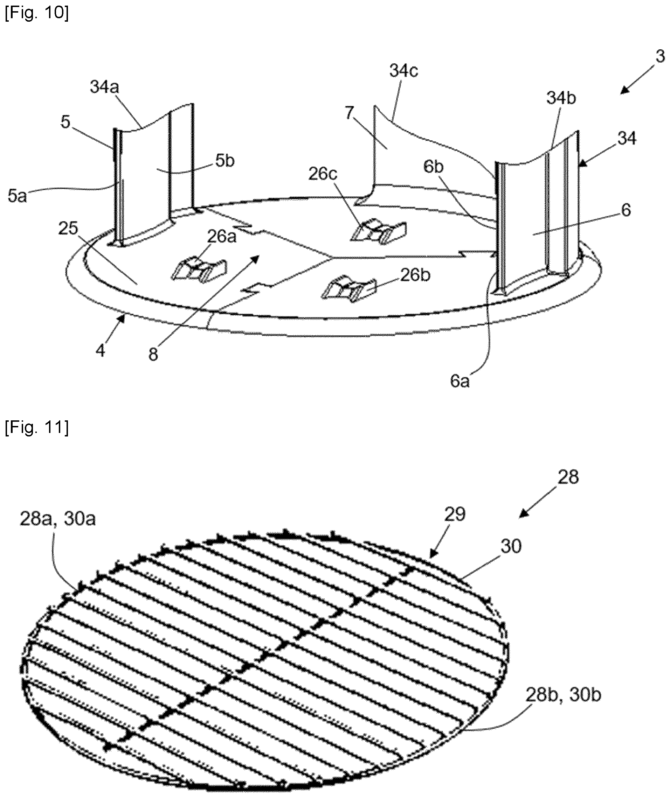

Comme illustré à la figure 10, le socle 4 de l'embase 3 peut également comporter sur sa face supérieure 25 un système de guidage comprenant des rampes de guidage 26a, 26b, 26c, de préférence trois rampes de guidage 26a, 26b, 26c réparties en triangle, deux de ces rampes de guidage 26a, 26b étant disposées vers l'avant au niveau de l'ouverture frontale 8 et la troisième rampe de guidage 26c étant disposée à proximité de la paroi de fond 7, comme le montre la figure 10. Ces rampes de guidage 26a, 26b, 26c trouvent particulièrement leur utilisation avec un récipient 10 adapté, comme sur la figure 1, pour lequel lors de l'insertion dudit récipient 10 dans le logement 9, le fond 27 du récipient 10 prend d'abord appui sur les deux premières rampes de guidage 26a, 26b puis également sur la troisième rampe de guidage 26c de sorte à positionner les éléments de préhension 18 en regard des découpes 15, 16 afin qu'ils ne butent pas contre les bords libres 5a, 6a des parois latérales 5, 6 au moment de l'insertion du récipient 10 dans le logement 9.

Des caractéristiques additionnelles sont envisageables sur l'appareil 1 afin de permettre son utilisation avec un ustensile de cuisson 28 disposé en lieu et place du récipient 10 dans le logement 9. Par exemple, cet ustensile de cuisson 28 peut être une grille 29, illustrée en figure 11, pour la réalisation de grillades, mais on pourrait envisager une plaque pour la réalisation de quiches ou de pizzas, voire un moule comportant une surface rigide plane sur laquelle sont agencées une ou des empreintes. Un tel ustensile de cuisson 28 sera disposé dans le logement 9 et supporté par les parois latérales 5, 6, voire aussi par la paroi de fond 7. Pour cela, les faces internes 5b, 6b des parois latérales 5, 6 comporteront des éléments de support (non illustrés) par exemple sous la forme de nervures transversales sur lesdites parois latérales 5, 6, ledit ustensile de cuisson 28 comprenant sur ses côtés latéraux deux éléments d'appui 28a, 28b qui prendront appui sur ces nervures lorsque l'ustensile 28 est placé dans le logement 9, en correspondance avec lesdites nervures. Par exemple, deux portions 30a, 30b opposées du contour 30 de la grille 29 viendront en appui sur les deux nervures agencées à une même hauteur sur les faces internes 5b, 6b des parois latérales 5, 6. Plusieurs nervures peuvent être agencées transversalement à différentes hauteurs sur chacune des faces internes 5b, 6b des parois latérales 5, 6, par exemple deux ou trois nervures, voire plus, de sorte à permettre le positionnement de l'ustensile de cuisson 28 à différentes hauteurs à l'intérieur du logement 9, afin d'éloigner plus ou moins ledit ustensile de cuisson 28 vis-à-vis du bord inférieur 13 du bloc de chauffe 2. Le bloc de chauffe 2 sera utilisé différemment selon qu'un récipient 10 ou un ustensile de cuisson 28 est disposé dans le logement 9 de l'embase 3. En effet, le dispositif de chauffe 11 et le dispositif de circulation d'air chaud du bloc de chauffe 2 sont utilisés concomitamment lorsqu'un récipient 10 est placé dans le logement 9. Tandis qu'avec un ustensile de cuisson 28 placé dans le logement 9, seul le dispositif de chauffe 11 du bloc de chauffe 2 pourra être utilisé.

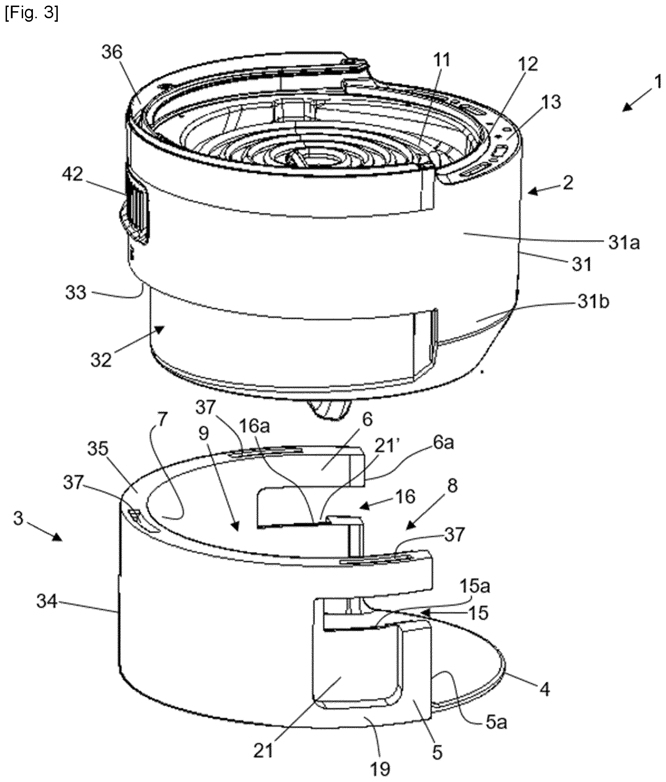

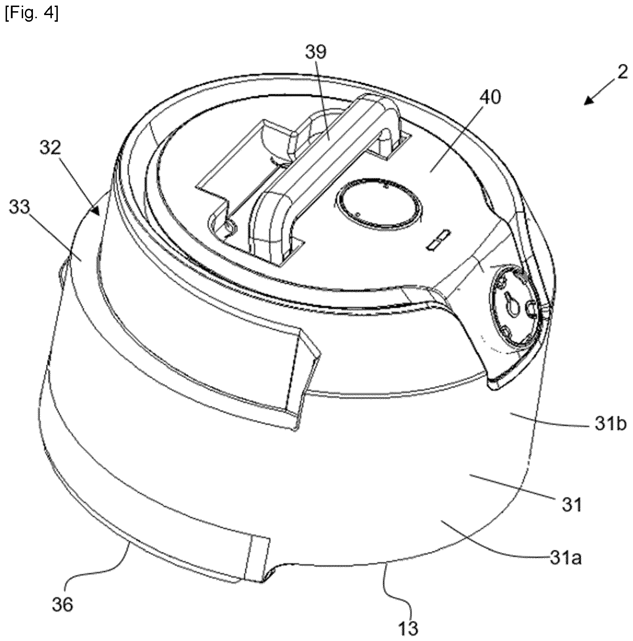

Comme illustré sur les figures 1 à 5, le bloc de chauffe 2 est amovible de l'embase 3. Le bloc de chauffe 2 comprend un contour 31 qui comprend une première portion 31a et une deuxième portion 31b. Une zone de rétrécissement 32 est agencée sur une partie de la deuxième portion 31b du contour 31 telles que le montrent les figures 3 et 4, ce qui permet de définir un épaulement 33 entre la première portion 31a et la deuxième portion 31b. La première portion 31a est disposée en partie inférieure et la deuxième portion 31b est disposée en partie supérieure lorsque le bloc de chauffe 2 est disposé à l'endroit, dans la configuration fonctionnelle de l'appareil 1. L'embase 3 comporte un contour 34 qui incorpore les parois latérales 5, 6 et la paroi de fond 7. Sur les figures 1 à 3, ce contour 34 de l'embase 3 est en une seule pièce, mais on pourrait prévoir un contour 34 en trois pièces 34a, 34b, 34c constituant les deux parois latérales 5, 6 et la paroi de fond 7 de l'embase 3, comme le montre la figure 10. Le contour 34 de l'embase 3 comprend un bord supérieur 35 sur lequel prend appui un bord inférieur 36 sur le bloc de chauffe 2 lorsqu'il est positionné normalement sur l'embase 3, dans la configuration fonctionnelle de l'appareil 1. Le bord supérieur 35 du contour 34 comprend des encoches 37 et le bord inférieur 36 du bloc de chauffe 2 comprend des pattes 38 qui s'engagent respectivement dans les encoches 37 de sorte à former un dispositif d'accrochage pour accrocher le bloc de chauffe 2 avec l'embase 3 dans la configuration fonctionnelle de l'appareil 1. Les pattes 38 peuvent venir en prise dans les encoches 37, par exemple en effectuant un léger encliquetage desdites pattes 38 dans lesdites encoches 37 lors de leur engagement. On pourrait au contraire prévoir d'actionner ces pattes 38, par exemple en prévoyant un mécanisme de transmission (non illustré) agencé entre lesdites pattes 38 et une poignée de préhension 39 agencée sur la face supérieure 40 du bloc de chauffe 2, cette poignée de préhension 40 permettant en outre la manipulation du bloc de chauffe 2 pour le dégager de l'embase 3 ou le placer sur celle-ci.

Comme illustré sur les figures 1 à 4, le bloc de chauffe 2 peut être placé en position retournée une fois celui-ci dégagé de l'embase 3, puis être placé par-dessus ladite embase 3 avec une orientation précise afin de pouvoir loger la zone de rétrécissement 32 à l'intérieur du contour 34 de l'embase 3, jusqu'à ce que l'épaulement 33 vienne en appui contre le bord supérieur 35 dudit contour 34 de l'embase 3, ce qui permet d'insérer la deuxième portion 31b du bloc de chauffe 2 dans le logement 9 de l'embase 3. Cela permet de définir une configuration de rangement de l'appareil 1 selon laquelle le bloc de chauffe 2 est en position retournée avec sa deuxième portion 31b disposée en-dessous du bord supérieur 35 du contour 34 de l'embase 3 et en partie encastrée dans le logement 9 de l'embase 3, la hauteur de l'appareil 1 en configuration de rangement étant ainsi inférieure à celle dudit appareil 1 en configuration fonctionnelle.

L'invention concerne également un système de cuisson qui comprend un appareil 1 présentant les caractéristiques précitées et un kit d'accessoires. De préférence, le kit d'accessoires comprendra plusieurs récipients 10 qui pourront avoir des hauteurs de contour 17 différentes et/ou être conçus dans des matériaux différents, par exemple en verre transparent, en verre opaque, en inox, en aluminium voire d'autres matériaux avec un revêtement adapté pour la cuisson d'aliments. Le kit d'accessoires pourra aussi comporter un ou plusieurs couvercles (non illustrés) adaptés aux divers récipients de sorte à couvrir le récipient 10 une fois celui-ci extrait du logement 9 et de pouvoir conserver la chaleur dans ledit récipient 10 contenant les aliments cuits. Ce kit d'accessoires pourra aussi comporter des ustensiles de cuisson 28 tels que présentés précédemment, dans une version adaptée de l'appareil 1.

D'autres variantes sont envisageables dans le cadre de l'invention. Par exemple, les éléments de préhension 18 pourront être d'une forme différente et les découpes 15, 16 sur les parois latérales 5, 6 pourront avoir une forme différente de celle d'une fente de sorte à les adapter auxdits éléments de préhension 18.

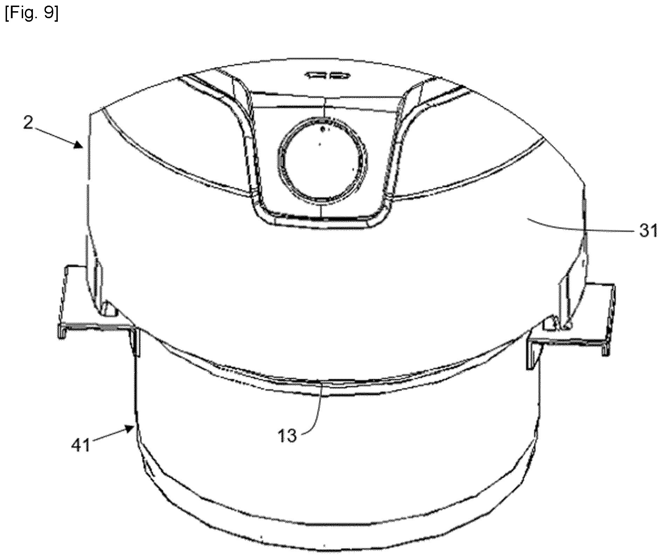

Dans une variante apparaissant à la figure 9, le bloc de chauffe 2 amovible peut être placé directement sur d'autres types de récipients de cuisson 41 présentant un diamètre adapté, par exemple une casserole ou un faitout. Ainsi, le kit d'accessoires peut comporter de tels récipients de cuisson 41 en complément du ou des récipients 10 prévus pour être insérés dans le logement 9 de l'embase 3. Dans cette variante de l'appareil 1, le joint d'étanchéité 12 sera préférentiellement mis en oeuvre sur le bord inférieur 13 du bloc de chauffe 2. Ces récipients de cuisson 41 de type casserole et faitout, voire autre, permettront la réception du bloc de chauffe 2 sans pour autant être adaptés pour être placés dans le logement 9 de l'embase 3. L'utilisateur pourrait ainsi placer ce bloc de chauffe 2 sur d'autres casseroles ou faitouts dont il dispose déjà dans sa cuisine et qui sont adaptés pour recevoir ledit bloc de chauffe 2.

## Revendications

1. Appareil de cuisson à air chaud (1), lequel comprend un bloc de chauffe (2) agencé en partie supérieure, une embase (3) agencée en partie inférieure et comprenant un logement (9) au-dessus duquel se situe le bloc de chauffe (2) et au moins un récipient de cuisson (10) muni d'une ouverture supérieure, ledit logement (9) étant apte à recevoir le récipient de cuisson (10) en disposant son ouverture supérieure en regard dudit bloc de chauffe (2), l'embase (3) comprenant une ouverture frontale (8) communiquant avec le logement (9) de sorte à autoriser l'insertion du récipient de cuisson (10) dans ledit logement (9) et son retrait de celui-ci en passant par ladite ouverture frontale, ledit appareil comprenant un dispositif de verrouillage agencé entre le récipient de cuisson et l'embase et mobile entre une position verrouillée dans laquelle ledit récipient de cuisson est immobilisé en position insérée dans le logement de l'embase et une position déverrouillée dans laquelle le récipient de cuisson est libre de mouvement vis-à-vis du logement de l'embase,
l'embase (3) comprenant deux parois latérales (5, 6) munies chacune d'un bord libre (5a, 6a) contigu à l'ouverture frontale (8) et d'une découpe (15, 16) transversale sur ladite paroi latérale (5, 6) et débouchant sur ledit bord libre (5a, 6a), chacune desdites découpes (15, 16) étant apte à recevoir un élément de préhension (18) du récipient de cuisson (10) en les laissant dépasser à l'extérieur des parois latérales (5, 6) de manière à conserver l'accès manuel à chaque élément de préhension (18) dudit récipient de cuisson (10) par lesdites parois latérales (5, 6) au cours de l'insertion ou du retrait du récipient de cuisson (10) dudit logement (9),
le dispositif de verrouillage comprenant les éléments de préhension (18) du récipient de cuisson (10) et les découpes (15, 16) des parois latérales (5, 6) de l'embase (3),
**caractérisé en ce que** les éléments de préhension (18) sont articulés sur le récipient de cuisson (10) pour être placés soit dans une position déployée selon laquelle lesdits éléments de préhension permettent la manipulation du récipient et peuvent être insérés dans les découpes (15, 16) des parois latérales (5, 6) de l'embase (3) soit dans une position rabattue selon laquelle lesdits éléments de préhension, en position dans les découpes, coopèrent avec des éléments de butée sur les faces externes (19, 20) des parois latérales (5, 6) et interdisent le retrait du récipient du logement (9).

2. Appareil de cuisson à air chaud (1) selon la revendication 1, dans lequel les éléments de butée sont mis en oeuvre par des cavités (21, 21') sur les faces externes (19, 20) des parois latérales (5, 6) au niveau des découpes (15, 16), les éléments de préhension (18) venant se loger dans lesdites cavités lors de leur déplacement de la position déployée vers la position rabattue.

3. Appareil de cuisson à air chaud (1) selon l'une quelconque des revendications 1 ou 2, dans lequel les éléments de préhension (18) du récipient de cuisson (10) comprennent chacun une came (24), les cames prenant appui sur les parois latérales (5, 6) au niveau des découpes (15, 16) recevant lesdits éléments de préhension.

4. Appareil de cuisson à air chaud (1) selon la revendication 3, dans lequel les cames (24) sont configurées pour rehausser le récipient de cuisson (10) dans le logement (9) lors du déplacement desdits éléments de préhension (18) de la position déployée vers la position rabattue.

5. Appareil de cuisson à air chaud (1) selon l'une des revendications 1 à 4, dans lequel l'embase (3) comprend un socle (4) agencé sous l'ouverture frontale (8) et le logement (9), le socle comprenant un système de guidage (26a, 26b, 26c) apte à aligner en hauteur les éléments de préhension (18) du récipient de cuisson (10) avec les découpes (15, 16) en début d'insertion du récipient de cuisson (10) par l'ouverture frontale (8).

6. Appareil de cuisson à air chaud (1) selon l'une quelconque des revendications 1 à 5, dans lequel les parois latérales (5, 6) de l'embase (3) comprennent chacune sur leur face interne (5b, 6b) au moins un élément de support apte à recevoir un élément d'appui (28a, 28b) d'un ustensile de cuisson (28) en maintenant ledit ustensile de cuisson (28) écarté du bloc de chauffe (2).

7. Appareil de cuisson à air chaud (1) selon l'une quelconque des revendications 1 à 6, dans lequel le bloc de chauffe (2) se monte de façon amovible au-dessus du logement (9) de l'embase (3) pour définir une configuration fonctionnelle de l'appareil de cuisson (1), ledit appareil de cuisson (1) présentant en outre une configuration de rangement dans laquelle le bloc de chauffe (2) est placé en position retournée par-dessus l'embase (3) en encastrant une partie dédiée dudit bloc de chauffe (2) dans le logement (9) de ladite embase (3).

8. Appareil de cuisson à air chaud selon l'une quelconque des revendications 1 à 7, dans lequel un dispositif d'étanchéité est mis en oeuvre entre l'ouverture supérieure de l'au moins un récipient de cuisson (10) et le bloc de chauffe (2) lorsque ledit au moins un récipient de cuisson (10) est inséré dans le logement (9).

9. Appareil de cuisson à air chaud selon l'une quelconque des revendications 1 à 8, dans lequel l'au moins un récipient de cuisson (10) est transparent.

10. Système de cuisson comprenant un appareil de cuisson à air chaud (1) présentant les caractéristiques l'une quelconque des revendications 1 à 9 et un kit d'accessoires de cuisson comprenant au moins un couvercle apte à être placé sur l'ouverture supérieure de l'au moins un récipient de cuisson (10) lorsqu'il est dégagé du logement.

11. Système de cuisson selon la revendication 10, dans lequel l'appareil de cuisson à air chaud (1) comprend les caractéristiques de la revendication 6 et le kit d'accessoires de cuisson comprend au moins un ustensile de cuisson (28) complémentaire à l'au moins un récipient de cuisson (10), chaque ustensile de cuisson (28) comprenant deux éléments d'appui (28a, 28b) aptes à reposer sur les au moins un élément de support des faces internes (5b, 6b) des deux parois latérales (5, 6) de l'embase (3) afin de maintenir ledit au moins un ustensile de cuisson (28) dans le logement (9) de l'embase (3) avec un écartement par rapport au bloc de chauffe (2), ledit au moins un ustensile de cuisson (28) étant notamment choisi parmi une grille (29), une plaque et un moule rigide plat muni d'empreintes.

## Patentansprüche

1. Heißluftkocheinrichtung (1), umfassend einen Heizblock (2), der in einem oberen Teil eingerichtet ist, eine Basis (3), die in einem unteren Teil eingerichtet ist und einen Sitz (9) umfasst, über dem sich der Heizblock (2) und mindestens ein Kochbehälter (10), der mit einer oberen Öffnung versehen ist, befindet, wobei der Sitz (9) geeignet ist, den Kochbehälter (10) aufzunehmen, indem er seine obere Öffnung dem Heizblock (2) zugewandt anordnet, wobei die Basis (3) eine vordere Öffnung (8) umfasst, die derart mit dem Sitz (9) kommuniziert, dass sie das Einsetzen des Kochbehälters (10) in den Sitz (9) und seine Entnahme von diesem durch die vordere Öffnung hindurch erlaubt, wobei die Einrichtung eine Verriegelungsvorrichtung umfasst, die zwischen dem Kochbehälter und der Basis eingerichtet ist und beweglich ist zwischen einer verriegelten Position, bei der der Kochbehälter in einer eingesetzten Position im Sitz der Basis immobilisiert ist, und einer entriegelten Position, bei der der Kochbehälter sich in Bezug auf den Sitz der Basis frei bewegen kann,
wobei die Basis (3) zwei Seitenwände (5, 6) umfasst, die jeweils mit einem an die vordere Öffnung (8) angrenzenden freien Rand (5a, 6a) und einem querverlaufenden Ausschnitt (15, 16) auf der Seitenwand (5, 6) versehen sind und in den freien Rand (5a, 6a) münden, wobei jeder der Ausschnitte (15, 16) geeignet ist, ein Greifelement (18) des Kochbehälters (10) aufzunehmen, indem er diese zur Außenseite der Seitenwände (5, 6) derart hervorstehen lässt, dass der manuelle Zugang zu jedem Greifelement (18) des Kochbehälters (10) durch die Seitenwände (5, 6) im Verlauf des Einsetzens oder der Entnahme des Kochbehälters (10) von dem Sitz (9) beibehalten wird,
wobei die Verriegelungsvorrichtung die Greifelemente (18) des Kochbehälters (10) und die Ausschnitte (15, 16) der Seitenwände (5, 6) der Basis (3) umfasst,
**dadurch gekennzeichnet, dass** die Greifelemente (18) auf dem Kochbehälter (10) angelenkt sind, um entweder in einer ausgeklappten Position platziert zu werden, in der die Greifelemente die Handhabung des Behälters erlauben und in die Ausschnitte (15, 16) der Seitenwände (5, 6) der Basis (3) eingesetzt werden können, oder in einer zusammengeklappten Position, in der die Greifelemente, in Position in den Ausschnitten, mit Anschlagelementen auf den Außenseiten (19, 20) der Seitenwände (5, 6) zusammenwirken und die Entnahme des Behälters von dem Sitz (9) verbieten.

2. Heißluftkocheinrichtung (1) nach Anspruch 1, wobei die Anschlagelemente über Hohlräume (21, 21') auf den Außenseiten (19, 20) der Seitenwände (5, 6) an den Ausschnitten (15, 16) implementiert werden, wobei die Greifelemente (18) bei ihrer Bewegung von der ausgeklappten Position in die zusammengeklappte Position in den Hohlräumen aufgenommen werden.

3. Heißluftkocheinrichtung (1) nach einer der Ansprüche 1 oder 2, wobei die Greifelemente (18) des Kochbehälters (10) jeweils eine Nocke (24) umfassen, wobei die Nocken auf den Seitenwänden (5, 6) an den Ausschnitten (15, 16) aufliegen, die die Greifelemente aufnehmen.

4. Heißluftkocheinrichtung (1) nach Anspruch 3, wobei die Nocken (24) konfiguriert sind, um bei der Bewegung der Greifelemente (18) von der ausgeklappten Position in die zusammengeklappte Position den Kochbehälter (10) im Sitz (9) anzuheben.

5. Heißluftkocheinrichtung (1) nach einem der Ansprüche 1 bis 4, wobei die Basis (3) einen Sockel (4) umfasst, der unter der vorderen Öffnung (8) und dem Sitz (9) eingerichtet ist, wobei der Sockel ein Führungssystem (26a, 26b, 26c) umfasst, das geeignet ist, zu Beginn des Einsetzens des Kochbehälters (10) durch die vordere Öffnung (8) die Höhe der Greifelemente (18) des Kochbehälters (10) mit den Ausschnitten (15, 16) auszurichten.

6. Heißluftkocheinrichtung (1) nach einem der Ansprüche 1 bis 5, wobei die Seitenwände (5, 6) der Basis (3) jeweils auf ihrer Innenseite (5b, 6b) mindestens ein Stützelement umfassen, das geeignet ist, ein Auflageelement (28a, 28b) eines Kochgeräts (28) aufzunehmen, indem es das Kochgerät (28) vom Heizblock (2) beabstandet hält.

7. Heißluftkocheinrichtung (1) nach einem der Ansprüche 1 bis 6, wobei der Heizblock (2) auf abnehmbare Weise über dem Sitz (9) der Basis (3) montiert wird, um eine funktionelle Konfiguration der Kocheinrichtung (1) zu definieren, wobei die Kocheinrichtung (1) weiter eine Lagerungskonfiguration aufweist, in der der Heizblock (2) in umgedrehter Position über der Basis (3) platziert ist, indem ein dedizierter Teil des Heizblocks (2) im Sitz (9) der Basis (3) eingepasst ist.

8. Heißluftkocheinrichtung nach einem der Ansprüche 1 bis 7, wobei eine Dichtungsvorrichtung zwischen der oberen Öffnung des mindestens einen Kochbehälters (10) und dem Heizblock (2) implementiert ist, wobei der mindestens eine Kochbehälter (10) im Sitz (9) eingesetzt ist.

9. Heißluftkocheinrichtung nach einem der Ansprüche 1 bis 8, wobei der mindestens eine Kochbehälter (10) durchsichtig ist.

10. Kochsystem, umfassend eine Heißluftkocheinrichtung (1), die die Eigenschaften nach einem der Ansprüche 1 bis 9 aufweist, und einen Kochzubehörsatz, umfassend mindestens einen Deckel, der geeignet ist, auf der oberen Öffnung des mindestens einen Kochbehälters (10) platziert zu werden, wenn er vom Sitz gelöst ist.

11. Kochsystem nach Anspruch 10, wobei die Heißluftkocheinrichtung (1) die Eigenschaften von Anspruch 6 umfasst und der Kochzubehörsatz mindestens ein zu dem mindestens einen Kochbehälter (10) zusätzliches Kochgerät (28) umfasst, wobei jedes Kochgerät (28) zwei Auflageelemente (28a, 28b) umfasst, die geeignet sind, auf dem mindestens einen Stützelement der Innenseiten (5b, 6b) der zwei Seitenwände (5, 6) der Basis (3) zu ruhen, um das mindestens eine Kochgerät (28) im Sitz (9) der Basis (3) mit einem Abstand in Bezug auf den Heizblock (2) zu halten, wobei das mindestens eine Kochgerät (28) insbesondere aus einem Grill (29), einer Platte und einer flachen festen Form, die mit Vertiefungen versehen ist, ausgewählt wird.

## Claims

1. Hot air cooking appliance (1) which comprises a heating block (2) arranged in the upper part, a base (3) arranged in the lower part and comprising a housing (9) above which the heating block (2) is located, and at least one cooking vessel (10) provided with an upper opening, said housing (9) being capable of receiving the cooking vessel (10) by having its upper opening facing said heating block (2), the base (3) comprising a front opening (8) communicating with the housing (9), so as to enable the insertion of the cooking vessel (10) in said housing (9) and its removal of it by passing through said front opening, said appliance comprising a locking device arranged between the cooking vessel and the base and mobile between a locked position, wherein said cooking vessel is immobilised in position inserted in the housing of the base and an unlocked position, wherein the cooking vessel is free to move vis-à-vis the housing of the base,
the base (3) comprising two side walls (5, 6) each provided with a free edge (5a, 6a) contiguous to the front opening (8) and a transverse cutout (15, 16) on said side wall (5, 6) and opening onto said free edge (5a, 6a), each of said cutouts (15, 16) being capable of receiving a gripping element (18) of the cooking vessel (10) by letting the side walls (5, 6) pass outside, so as to preserve manual access to each gripping element (18) of said cooking vessel (10) by said side walls (5, 6) during the insertion or the removal from the cooking vessel (10) of said housing (9),
the locking device comprising the gripping elements (18) of the cooking vessel (10) and the cutouts (15, 16) of the side walls (5, 6) of the base (3),
**characterised in that** the gripping elements (18) are hinged on the cooking vessel (10) to be placed either in a deployed position according to which said gripping elements enable the handling of the container and can be inserted in the cutouts (15, 16) of the side walls (5, 6) of the base (3), either in a folded position according to which said gripping elements, in position in the cutouts, engage with abutment elements on the external faces (19, 20) of the side walls (5, 6) and prohibit the removal of the container from the housing (9).

2. Hot air cooking appliance (1) according to claim 1, wherein the abutment elements are implemented by cavities (21, 21') on the external faces (19, 20) of the side walls (5, 6) at the cutouts (15, 16), the gripping elements (18) being housed in said cavities during their movement from the deployed position to the folded position.

3. Hot air cooking appliance (1) according to any one of claims 1 or 2, wherein the gripping elements (18) of the cooking vessel (10) each comprise a cam (24), the cams bearing on the side walls (5, 6) at the cutouts (15, 16) receiving said gripping elements.

4. Hot air cooking appliance (1) according to claim 3, wherein the cams (24) are configured to elevate the cooking vessel (10) in the housing (9) during the movement of said gripping elements (18) from the deployed position to the folded position.

5. Hot air cooking appliance (1) according to one of claims 1 to 4, wherein the base (3) comprises a stand (4) arranged under the front opening (8) and the housing (9), the stand comprising a guiding system (26a, 26b, 26c) capable of aligning by height the gripping elements (18) of the cooking vessel (10) with the cutouts (15, 16) at the start of insertion of the cooking vessel (10) through the front opening (8).

6. Hot air cooking appliance (1) according to any one of claims 1 to 5, wherein the side walls (5, 6) of the base (3) each comprise on their internal face (5b, 6b) at least one support element capable of receiving a support element (28a, 28b) of a cooking utensil (28) by keeping said cooking utensil (28) away from the heating block (2).

7. Hot air cooking appliance (1) according to any one of claims 1 to 6, wherein the heating block (2) is removably mounted above the housing (9) of the base (3) to define a functional configuration of the cooking appliance (1), said cooking appliance (1) further having a storage configuration, wherein the heating block (2) is placed in the returned position above the base (3) by embedding a dedicated part of said heating block (2) in the housing (9) of said base (3).

8. Hot air cooking appliance according to any one of claims 1 to 7, wherein a sealing device is implemented between the upper opening of the at least one cooking vessel (10) and the heating block (2) when said at least one cooking vessel (10) is inserted in the housing (9).

9. Hot air cooking appliance according to any one of claims 1 to 8, wherein the at least one cooking vessel (10) is transparent.

10. Cooking system comprising a hot air cooking appliance (1) having the features of any one of claims 1 to 9 and a cooking accessory kit comprising at least one cover capable of being placed on the upper opening of the at least one cooking vessel (10) when it is freed from the housing.

11. Cooking system according to claim 10, wherein the hot air cooking appliance (1) comprises the features of claim 6 and the cooking accessory kit comprises at least one cooking utensil (28) complementary to the at least one cooking vessel (10), each cooking utensil (28) comprising two support elements (28a, 28b) capable of resting on the at least one support element of the internal faces (5b, 6b) of the two side walls (5, 6) of the base (3) in order to hold said at least one cooking utensil (28) in the housing (9) of the base (3) with a gap with respect to the heating block (2), said at least one cooking utensil (28) being, in particular, chosen from among a grille (29), a plate and a flat rigid mould provided with imprints.
